(19) Europäisches Patentamt / European Patent Office / Office européen des brevets

(11) **EP 4 378 775 A1**

(12) # EUROPEAN PATENT APPLICATION
published in accordance with Art. 153(4) EPC

(43) Date of publication:
**05.06.2024 Bulletin 2024/23**

(21) Application number: **22855218.8**

(22) Date of filing: **25.07.2022**

(51) International Patent Classification (IPC):
*B60W 20/13* (2016.01)   *B60W 40/10* (2012.01)
*B60W 40/06* (2012.01)   *B60W 40/068* (2012.01)
*B60W 40/072* (2012.01)   *B60W 40/076* (2012.01)
*B60W 10/06* (2006.01)   *B60L 58/12* (2019.01)

(52) Cooperative Patent Classification (CPC):
**B60L 58/12; B60W 10/06; B60W 20/00;
B60W 20/12; B60W 20/13; B60W 20/15;
B60W 40/06; B60W 40/068; B60W 40/072;
B60W 40/076; B60W 40/10**

(86) International application number:
**PCT/CN2022/107658**

(87) International publication number:
**WO 2023/016235 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2021 CN 202110932114**

(71) Applicant: **Huawei Technologies Co., Ltd.
Shenzhen, Guangdong 518129 (CN)**

(72) Inventor: **XU, Weichang
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **ENERGY MANAGEMENT METHOD, APPARATUS, AND SYSTEM**

(57)     An energy management method and apparatus, and a system are provided. In this method, the energy management apparatus may obtain traveling environment information of a vehicle, where the traveling environment information includes a terrain parameter. The energy management apparatus may determine target motion information of the vehicle based on the traveling environment information, where the target motion information includes a preset speed, a preset acceleration, and a preset traveling path. The energy management apparatus may control, based on the target motion information and target power consumption, an engine in the vehicle to rotate. In this case, the target motion information of the vehicle is determined based on the terrain parameter, and the engine in the vehicle is controlled, based on the target motion information and the target power consumption, to rotate. This can implement balance control of an on-board battery, and effectively reduce a loss of the on-board battery. As a result, the on-board battery is protected, and energy utilization is improved.

FIG. 3

**Description**

**CROSS-REFERENCE TO RELATED APPLICATIONS**

This application claims priority to Chinese Patent Application No. 202110932114.X, filed with the China National Intellectual Property Administration on August 13, 2021 and entitled "ENERGY MANAGEMENT METHOD AND APPARATUS, AND SYSTEM", which is incorporated herein by reference in its entirety.

**TECHNICAL FIELD**

Embodiments of this application relate to the field of automobile energy technologies, and in particular, to an energy management method and apparatus, and a system.

**BACKGROUND**

With the development of new energy technologies, electric vehicles receive widespread attention. During traveling of the electric vehicle, an on-board battery may release stored electric energy, to drive the electric vehicle to travel. The on-board battery of the electric vehicle is limited by a traveling status of the electric vehicle. If the electric vehicle suddenly accelerates or decelerates, great impact is caused on the on-board battery, which results in a serious loss of the on-board battery.

In view of this, how to properly allocate energy of the electric vehicle with reference to the traveling status of the electric vehicle to reduce the loss of the on-board battery is an urgent problem to be resolved.

**SUMMARY**

This application provides an energy management method and apparatus, and a system, to properly allocate energy of an electric vehicle and reduce a loss of an on-board battery.

According to a first aspect, an embodiment of this application provides an energy management method. The method may be implemented by an energy management apparatus. In this method, the energy management apparatus may obtain traveling environment information of a vehicle, where the traveling environment information includes a terrain parameter. The energy management apparatus may determine target motion information of the vehicle based on the traveling environment information, where the target motion information includes a preset speed, a preset acceleration, and a preset traveling path. The energy management apparatus may control, based on the target motion information and target power consumption, an engine in the vehicle to rotate.

It should be understood that the "traveling environment information" in this embodiment of this application is information about a traveling environment of the vehicle within preset duration. The preset duration may be 10s, 30s, 60s, or the like. This is not specifically limited in embodiments of this application. The "target motion information" in this embodiment of this application may be understood as a motion status of the vehicle within the preset duration. The preset speed may include a speed corresponding to each moment that is within the preset duration. The preset acceleration may include an acceleration corresponding to each moment that is within the preset duration. The preset traveling path is a path on which the vehicle is to travel within the preset duration.

In this embodiment of this application, the target motion information of the vehicle may be determined based on the terrain parameter, and the engine in the vehicle may be controlled, based on the target motion information and the target power consumption, to rotate. This can implement power balance control of an on-board battery, and effectively reduce a loss of the on-board battery.

In a possible design, the target motion information of the vehicle is determined based on the terrain parameter.

In a possible design, the traveling environment information may further include obstacle information and weather information, and the energy management apparatus may determine the preset traveling path based on the obstacle information and the weather information.

In a possible design, the traveling environment information may include a slope, a curvature, a friction coefficient, and the like of a road surface. This is not specifically limited in embodiments of this application.

It should be noted that the "target power consumption" in this embodiment of this application may be understood as an amount of power to be consumed by the vehicle to implement the target motion information. The amount of power may be indicated by a SOC value of the on-board battery.

There are a plurality of implementations of determining the target power consumption corresponding to the target motion information, including but not limited to the following manners.

Manner 1: The energy management apparatus may determine the target power consumption based on a mapping relationship between a distance of the preset traveling path in the target motion information and the target power consumption.

In Manner 1, efficiency of determining the target power consumption is higher.

Manner 2: The energy management apparatus may determine the target power consumption based on a mapping relationship between the preset speed in the target motion information and the target power consumption.

In Manner 2, the determined target power consumption is more accurate.

Manner 3: The energy management apparatus may determine the target power consumption based on a mapping relationship between the preset acceleration in the target motion information and the target power consumption.

In Manner 3, the determined target power consumption is more accurate.

In a possible design, the terrain parameter may be obtained by using a high-definition map and/or a roadside device.

In this design, a terrain parameter of the traveling environment of the vehicle within the preset duration may be obtained by using the high-definition map and/or the roadside device, so that the target motion information subsequently determined based on the traveling environment information is more consistent with a traveling status of the vehicle.

In a possible design, a process in which the energy management apparatus may control, based on the target motion information and the target power consumption, the engine in the vehicle to rotate may be: determining a first control signal based on the target motion information and the target power consumption; and controlling, based on the first control signal, the engine to rotate.

In this design, the engine in the vehicle may be controlled, based on the preset speed, the preset traveling path, and the target power consumption, to rotate. In this way, energy management of the vehicle is implemented, and the loss of the on-board battery can be effectively reduced.

It should be noted that specific implementations of controlling, based on the first control signal, the engine to rotate are different for different types of electric vehicles. The following provides descriptions for different cases.

Case 1: All-electric vehicle

For the all-electric vehicle, a process in which the energy management apparatus controls, based on the first control signal, the engine to rotate may be: determining a target rotational speed and a target torque of the engine based on the first control signal; determining a first state of charge SOC value after battery optimization, based on the target rotational speed and the target torque of the engine, a current torque and a current rotational speed of the engine, a SOC change value of the battery in the vehicle within the preset duration, and a current SOC value and a target SOC value of the battery; and determining a first load power corresponding to the first SOC value, determining a second control signal corresponding to the first load power, and controlling, based on the second control signal, the engine to rotate.

Case 2: Hybrid vehicle

For the all-electric vehicle, a process in which the energy management apparatus controls, based on the first control signal, the engine to rotate may be: determining a target rotational speed and a target torque of the engine based on the first control signal; determining a second SOC value after battery optimization and a target weight of fuel based on the target rotational speed and the target torque of the engine, a current torque and a current rotational speed of the engine, a SOC change value of the battery in the vehicle within the preset duration, a current SOC value and a target SOC value of the battery, and a current weight of the fuel in the vehicle; and determining a second load power that corresponds to the second SOC value and the target weight of the fuel, determining a third control signal corresponding to the second load power, and controlling, based on the third control signal, the engine to rotate.

In a possible design, a process in which the energy management apparatus determines the target motion information of the vehicle based on the traveling environment information may be: determining reference motion information based on a destination and historical motion information of the vehicle, where the reference motion information includes a first traveling path and a first speed; and inputting the first traveling path, the first speed, the terrain parameter, and current motion information of the vehicle to a vehicle motion model, to obtain the target motion information.

The "destination" may be understood as a fixed location or a target lane. This is not specifically limited in embodiments of this application. The "historical motion information" may be understood as a traveling path on which the vehicle has traveled within specific duration, a traveling speed and a traveling acceleration with which the vehicle has traveled within the specific duration, and the like. The "reference motion information" may be understood as motion information, in an ideal state, that is predicted based on the "historical motion information". The "current motion information" may be understood as a traveling speed and a traveling acceleration of the vehicle at a current moment.

In a possible design, when the traveling environment information of the vehicle is the terrain parameter, the energy management apparatus may determine a road surface material of a first road surface based on semantic information of the high-definition map, and determine the terrain parameter based on a mapping relationship between the road surface material and the terrain parameter. The first road surface is a road surface of any one of a plurality of candidate paths for the vehicle to reach the destination. The semantic information of the high-definition map may include road attribute information, an area in which a global positioning system (global positioning system, GPS) signal disappears, a road construction status, and the like. This is not specifically limited in embodiments of this application.

In this design, a more accurate terrain parameter may be further determined by using the semantic information of the high-definition map.

According to a second aspect, an embodiment of this application further provides an energy management apparatus.

For example, the apparatus may include:

an obtaining module, configured to obtain traveling environment information of a vehicle, where the traveling environment information includes a terrain parameter; and

a processing module, configured to determine target motion information of the vehicle based on the traveling environment information, where the target motion information includes a preset speed, a preset acceleration, and a preset traveling path.

The processing module is further configured to control, based on the target motion information and target power consumption, an engine in the vehicle to rotate.

It should be understood that the "traveling environment information" in this embodiment of this application is information about a traveling environment of the vehicle within preset duration. The preset duration may be 10s, 30s, 60s, or the like. This is not specifically limited in embodiments of this application. The "target motion information" in this embodiment of this application may be understood as a motion status of the vehicle within the preset duration. The preset speed may include a speed corresponding to each moment that is within the preset duration. The preset acceleration may include an acceleration corresponding to each moment that is within the preset duration. The preset traveling path is a path on which the vehicle is to travel within the preset duration.

In a possible design, the terrain parameter is obtained by using a high-definition map and/or a roadside device.

In a possible design, the traveling environment information may further include obstacle information and weather information, and the processing module is further configured to determine the preset traveling path based on the obstacle information and the weather information.

In a possible design, the processing module is further configured to: determine a first control signal based on the target motion information and the target power consumption; and control, based on the first control signal, the engine to rotate.

In a possible design, the processing module is further configured to: determine a target rotational speed and a target torque of the engine based on the first control signal; determine a first state of charge SOC value after battery optimization, based on the target rotational speed and the target torque of the engine, a current torque and a current rotational speed of the engine, a SOC change value of the battery in the vehicle within the preset duration, and a current SOC value and a target SOC value of the battery; and determine a first load power corresponding to the first SOC value, determine a second control signal corresponding to the first load power, and control, based on the second control signal, the engine to rotate.

In a possible design, the processing module is further configured to: determine a target rotational speed and a target torque of the engine based on the first control signal; determine a second SOC value after battery optimization and a target weight of fuel based on the target rotational speed and the target torque of the engine, a current torque and a current rotational speed of the engine, a SOC change value of the battery in the vehicle within the preset duration, a current SOC value and a target SOC value of the battery, and a current weight of the fuel in the vehicle; and determine a second load power that corresponds to the second SOC value and the target weight of the fuel, determine a third control signal corresponding to the second load power, and control, based on the third control signal, the engine to rotate.

In a possible design, the processing module is further configured to: determine reference motion information based on a destination and historical motion information of the vehicle, where the reference motion information includes a first traveling path and a first speed; and input the first traveling path, the first speed, a first acceleration, the terrain parameter, and current motion information of the vehicle to a vehicle motion model, to obtain the target motion information.

The "destination" may be understood as a fixed location or a target lane. This is not specifically limited in embodiments of this application. The "historical motion information" may be understood as a traveling path on which the vehicle has traveled within specific duration, a traveling speed and a traveling acceleration with which the vehicle has traveled within the specific duration, and the like. The "reference motion information" may be understood as motion information, in an ideal state, that is predicted based on the "historical motion information". The "current motion information" may be understood as a traveling speed and a traveling acceleration of the vehicle at a current moment.

In a possible design, the obtaining module is further configured to: determine a road surface material of a first road surface based on semantic information of the high-definition map, and determine the terrain parameter based on a mapping relationship between the road surface material and the terrain parameter. The first road surface is a road surface of any one of a plurality of candidate paths for the vehicle to reach the destination. The semantic information of the high-definition map may include road attribute information, an area in which a GPS signal disappears, a road construction status, and the like. This is not specifically limited in embodiments of this application.

In a possible design, the apparatus may be a chip or an integrated circuit.

In a possible design, the apparatus may be a target vehicle or a server.

According to a third aspect, an embodiment of this application further provides a vehicle. For example, the vehicle includes a memory and a processor. The memory is configured to store a computer program. The processor is configured to execute a computing program stored in the memory, to implement the energy management method according to any one of the first aspect or the possible designs of the first aspect.

According to a fourth aspect, an embodiment of this application further provides a server. For example, the server includes a memory and a processor. The memory is configured to store a computer program. The processor is configured to execute a computing program stored in the memory, to implement the energy management method according to any one of the first aspect or the possible designs of the first aspect.

In a possible design, the server is a single server or a server cluster including a plurality of sub-servers. When the server is a server cluster including a plurality of sub-servers, the plurality of sub-servers jointly perform the energy management method according to any one of the first aspect and the possible designs of the first aspect.

According to a fifth aspect, an embodiment of this application further provides a computer-readable storage medium. The computer-readable storage medium stores a computer program, and when the computer program is run, the energy management method according to any one of the first aspect and the possible designs of the first aspect is implemented.

According to a sixth aspect, an embodiment of this application provides a chip system. The chip system includes at least one processor, and when program instructions are executed in the at least one processor, the energy management method according to any one of the first aspect and the possible designs of the first aspect is implemented.

In a possible design, the chip system further includes a communication interface, and the communication interface is configured to input or output information.

In a possible design, the chip system further includes a memory. The memory is coupled to the processor through the communication interface, and the memory is configured to store the foregoing instructions, so that the processor reads, through the communication interface, the instructions stored in the memory.

In a possible design, the processor may be a processing circuit. This is not limited in this application.

According to a seventh aspect, an embodiment of this application further provides a computer program product including instructions. When the computer program product runs on the foregoing apparatus, the method according to any one of the first aspect and the optional designs of the first aspect is implemented.

According to an eighth aspect, an embodiment of this application further provides an energy management system. For example, the system includes:

a control unit, configured to: determine a first control signal based on target motion information and target power consumption of a vehicle, and send the first control signal to a battery management system, where the target motion information is determined based on traveling environment information, and the traveling environment information includes a terrain parameter; and

the battery management system, configured to: receive the first control signal, and control, based on the first control signal, an engine in the vehicle to rotate.

In a possible design, the control unit is a vehicle controller in the vehicle.

For beneficial effects of the second aspect to the eighth aspect, refer to the description of the beneficial effects of the first aspect. Details are not described herein again.

## BRIEF DESCRIPTION OF DRAWINGS

FIG. 1 is a schematic diagram of a scenario of an on-board battery;

FIG. 2A is a schematic diagram of a possible system architecture to which an embodiment of this application is applicable;

FIG. 2B is a schematic diagram of a possible vehicle structure to which an embodiment of this application is applicable;

FIG. 3 is a schematic flowchart of an energy management method according to an embodiment of this application;

FIG. 4 is a schematic diagram of a scenario to which an embodiment of this application is applicable;

FIG. 5A is a possible schematic flowchart of controlling an engine to rotate according to an embodiment of this application;
FIG. 5B is another possible schematic flowchart of controlling an engine to rotate according to an embodiment of this application;
FIG. 6 is a schematic diagram of a structure of an energy management apparatus according to an embodiment of this application; and
FIG. 7 is a schematic diagram of a structure of a chip system according to an embodiment of this application.

## DESCRIPTION OF EMBODIMENTS

First, some terms in embodiments of this application are described for ease of understanding.

(1) A high-definition map is an essential component for autonomous driving, with characteristics of "high precision", "high dynamics" and "multi-dimensionality". "High precision" means being precise at a centimeter level. For example, detailed descriptions may be provided for a geometric structure of a road surface, a color and a shape of a road marking line, data attributes (a slope, a curvature, a course, an elevation, and the like) of each lane, information about a road median (and a material thereof) and the like, a position of the road median and the like. "High dynamics" means that the high-definition map features real-time data. "Multi-dimensionality" means that the map includes not only a detailed lane model and detailed road component information, but also some road attribute information, such as an area in which a GPS signal disappears and a road construction status, related to traffic safety. The high-definition map includes accurate vehicle position information and abundant road element data information, constructing an overall memory and overall cognition for space that are similar to those of a human brain. The high-definition map may assist a vehicle in predicting complex information of a road surface, precisely locate the vehicle on a lane, assist the vehicle in obtaining accurate and effective current position and environment information, and plan an appropriate route for the vehicle.
(2) A battery management system (battery management system, BMS) is an indispensable component in an electric vehicle, and is a center for managing and monitoring an on-board battery. The battery management system may be configured to perform real-time monitoring of a physical parameter of the battery, battery status estimation, online diagnosis and warning, charge, discharge and pre-charge control and balance management, and the like.
(3) Motion information is used to describe a motion status of a vehicle, for example, a speed, an acceleration, and a traveling path of the vehicle, in a time period.
(4) In embodiments of this application, the term "a plurality of" means two or more. "And/or" describes an association relationship between associated objects, and indicates that three relationships may exist. For example, A and/or B may indicate the following cases: Only A exists, both A and B exist, and only B exists. A and B each may be singular or plural. The character "/" generally indicates an "or" relationship between the associated objects. "At least one of the following items" or a similar expression thereof refers to any combination of these items, including a singular item or any combination of plural items. For example, at least one of a, b, or c may represent a, b, c, a and b, a and c, b and c, or a, b, and c.

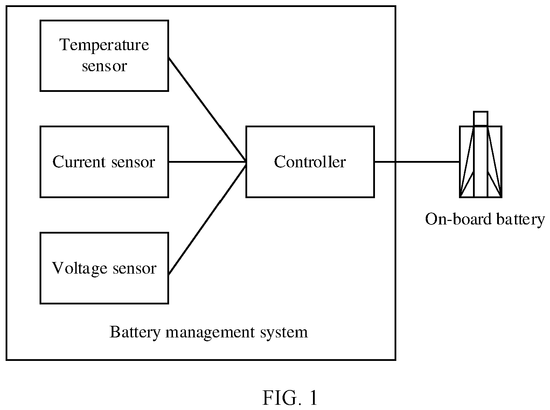

The terms "first" and "second" below in the descriptions of embodiments of this application are merely used for a description purpose, and shall not be understood as an indication or implication of relative importance or implicit indication of a quantity of indicated technical features. Therefore, a feature limited by "first" or "second" may explicitly or implicitly include one or more features.
To protect an on-board battery, as shown in FIG. 1, in some technical solutions, a battery management system is provided with a controller, a temperature sensor, a current sensor, and a voltage sensor. The controller may obtain temperature information of the on-board battery through the temperature sensor, obtain voltage information of the on-board battery through the voltage sensor, and obtain current information of the on-board battery through the current sensor. Then, the controller may adjust the on-board battery based on status information of the on-board battery. However, in the solutions, the status information of the on-board battery cannot be predicted, and the on-board battery cannot be adjusted in real time or in advance. Therefore, a loss of the on-board battery caused by sudden acceleration or deceleration of an electric vehicle still cannot be avoided.
In view of this, embodiments of this application provide an energy management method. The method may be implemented by an energy management apparatus. In this method, the energy management apparatus may obtain traveling environment information (for example, a terrain parameter) of a vehicle, determine target motion information of the vehicle based on the traveling environment information, and control, based on the target motion information (for example, a preset speed, a preset acceleration, and a preset traveling path) and target power consumption, an engine in the vehicle to rotate. In this way, balance control of an on-board battery can be implemented, and a loss of the on-board battery can be effectively reduced. As a result, the on-board battery is protected, and energy utilization efficiency is improved.

It should be understood that the "traveling environment information" in embodiments of this application is information about a traveling environment of the vehicle within preset duration. The preset duration may be 10s, 30s, 60s, or the like. This is not specifically limited in embodiments of this application. The "target motion information" in embodiments of this application may be understood as a motion status of the vehicle within the preset duration. The preset speed may include a speed corresponding to each moment that is within the preset duration. The preset acceleration may include an acceleration corresponding to each moment that is within the preset duration. The preset traveling path is a path on which the vehicle is to travel within the preset duration.

It should be noted that when the energy management method provided in embodiments of this application is applied to a vehicle, the energy management method may be specifically applied to a vehicle having an energy management function, or a vehicle-mounted device (on-board unit, OBU) having an energy management function in a vehicle. The vehicle-mounted device may include but is not limited to a vehicle-mounted terminal, a vehicle-mounted controller, a vehicle-mounted module, a vehicle-mounted assembly, a vehicle-mounted component, a vehicle-mounted chip, an on-board unit, an electronic control unit (electronic control unit, ECU), a domain controller (domain controller, DC), and the like.

In some embodiments, the energy management method provided in embodiments of this application may also be applied to an internet of vehicles server. The internet of vehicles server is a device having an energy management function. For example, the internet of vehicles server may be a physical device like a host or a server, or may be a virtual device like a virtual machine or a container. A vehicle may authorize the internet of vehicles server to perform energy management. The internet of vehicles server may obtain traveling environment information of the vehicle by using information fed back by one or more of the vehicle, a roadside unit, another vehicle, or the like. For example, the vehicle may feed back traveling environment information such as a terrain parameter to the server. Then, the server may predict target motion information and target power consumption of the vehicle based on the terrain parameter, and send a charging control signal to the vehicle based on the target motion information and the target power consumption. If the vehicle agrees to accept the control signal, the server may control, based on the control signal, a motor in the vehicle to rotate, to implement power balance control of the on-board battery.

It should be noted that, for ease of description, the internet of vehicles server is briefly referred to as a server below. In other words, in a specific implementation process, the "server" below may be a server in a general sense, or may be another device having an energy management function, or may be a module (for example, a chip or an integrated circuit) in a device.

Before the technical solutions in embodiments of this application are described in detail, a system architecture to which embodiments of this application are applicable is first described with reference to the accompanying drawings.

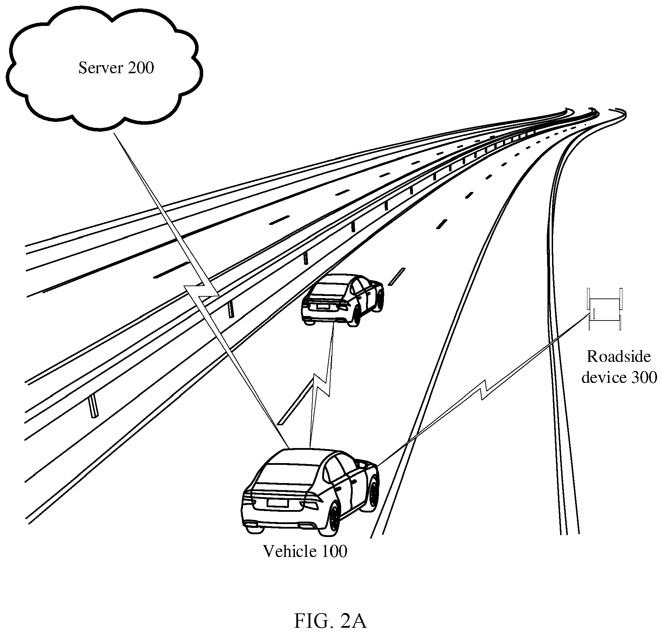

For example, FIG. 2A is a schematic diagram of a possible system architecture to which an embodiment of this application is applicable. As shown in FIG. 2A, a system may include a vehicle 100 and a server 200.

In a possible implementation, the vehicle 100 may obtain traveling environment information (for example, a terrain parameter) of the vehicle 100, determine target motion information (for example, a preset speed, a preset acceleration, and a preset traveling path) of the vehicle 100 based on the traveling environment information, and control, based on the target motion information and target power consumption, an engine in the vehicle 100 to rotate.

In another possible implementation, the vehicle 100 may obtain traveling environment information (for example, a terrain parameter) of the vehicle 100, and send the traveling environment information to the server 200. Then, the server 200 may determine target motion information (for example, a preset speed, a preset acceleration, and a preset traveling path) of the vehicle 100, determine a corresponding control signal based on the target motion information and target power consumption, and send the control signal to the vehicle 100. The vehicle 100 may control, based on the control signal, an engine in the vehicle 100 to rotate.

In another possible implementation, the system further includes a roadside device 300. The roadside device 300 may obtain traveling environment information (for example, a terrain parameter) of the vehicle 100, and send the traveling environment information to the server 200. Then, the server 200 may determine target motion information (for example, a preset speed, a preset acceleration, and a preset traveling path) of the vehicle 100, and control, based on the target motion information and target power consumption, an engine in the vehicle 100 to rotate.

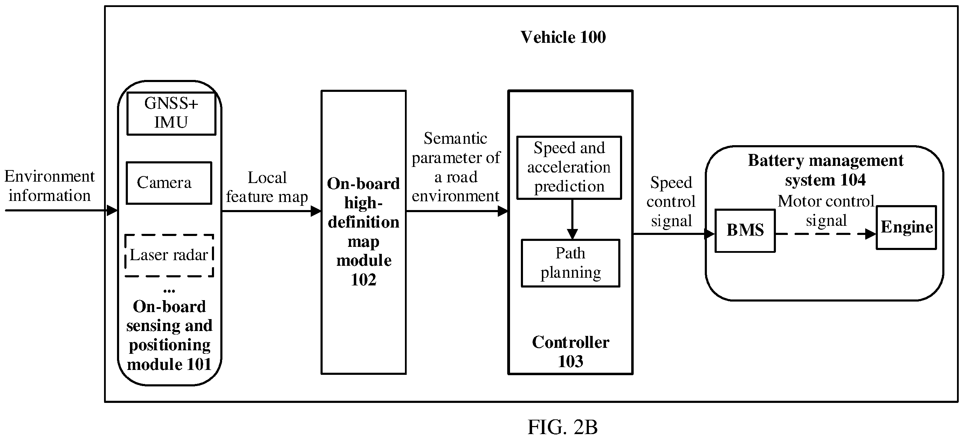

FIG. 2B is a schematic diagram of a possible structure of the vehicle 100. As shown in FIG. 2B, the vehicle 100 may include an on-board sensing and positioning module 101, an on-board high-definition map module 102, a controller 103, and a battery energy management system 104.

The on-board sensing and positioning module 101 may include an inertial navigation system (global navigation satellites system+inertial measurement unit, GNSS+IMU) and a sensing sensor like a camera. The GNSS+IMU may be configured to perform high-precision positioning, to obtain current positioning information of the vehicle 100. The camera may be used to obtain image information of a traveling environment of the vehicle. Then, the on-board sensing and positioning module 101 fuses the positioning information and the image information to obtain a local feature map.

Optionally, the on-board sensing and positioning module 101 may further include a lidar. The lidar may be configured to obtain point cloud data corresponding to the traveling environment information of the vehicle 100. Then, the on-board sensing and positioning module 101 fuses the point cloud data, the positioning information, and the image information to obtain a local feature map.

The on-board high-definition map module 102 may be configured to determine a high-definition semantic map of the vehicle 100.

The controller 103 may be configured to: predict the preset speed and the preset acceleration for the vehicle 100 based on a semantic parameter of road environment information, and perform path planning.

It should be understood that "path planning" is planning the preset traveling path of the vehicle 100.

The battery energy management system 104 may be configured to: determine a load power of an on-board battery based on a speed control signal of the vehicle, and control, based on the load power, an engine to rotate, to implement charging or discharging of the on-board battery.

In a possible implementation, the on-board sensing and positioning module 101 may send positioning information of the traveling environment of the vehicle 100 and the local feature map to the on-board high-definition map module 102. Then, the on-board high-definition map module 102 matches the positioning information and the local feature map with a global high-definition map, obtains abundant environmental semantic information from the global high-definition map, updates the local feature map to a high-definition semantic map, and sends the high-definition semantic map to the controller 103. The controller 103 receives the high-definition semantic map, performs path planning for the vehicle 100 based on the high-definition semantic map, outputs a preset speed sequence and a preset acceleration sequence of preset duration, drives the vehicle 100 to travel based on the preset speed sequence and the preset acceleration sequence, and sends a speed control signal that corresponds to the preset speed sequence and the preset acceleration sequence to the battery management system 104. Then, the battery management system 104 may determine a load power that is of the on-board battery and that corresponds to the speed control signal, determine a motor control signal based on the load power, and control, based on the motor control signal, the engine in the vehicle to rotate, to control charging or discharging of the on-board battery. As a result, the on-board battery is optimized.

In this implementation, the vehicle 100 may obtain abundant traveling environment information, and perform path planning through the controller 103, to obtain more abundant target motion information. Therefore, the battery management system 104 can perform balance control on the on-board battery in advance, so that system predictability, adaptability, and responsiveness of the battery management system 104 are effectively improved.

It should be noted that in FIG. 2B, module division of the vehicle 100 is merely an example, and is not a limitation on a structure of the vehicle 100. In addition, in FIG. 2B, the lidar is merely an example of an apparatus that can collect point cloud data. An apparatus for collecting point cloud data in this embodiment of this application is not limited to the lidar, and may alternatively be any other apparatus that can collect point cloud data. Likewise, the camera is merely an example of an apparatus that can capture an image. An apparatus for capturing an image in this embodiment of this application is not limited to the camera, and may alternatively be any other apparatus that can capture an image, like a mobile phone or an on-board camera.

With reference to the accompanying drawings, the following describes in detail the energy management method provided in embodiments of this application.

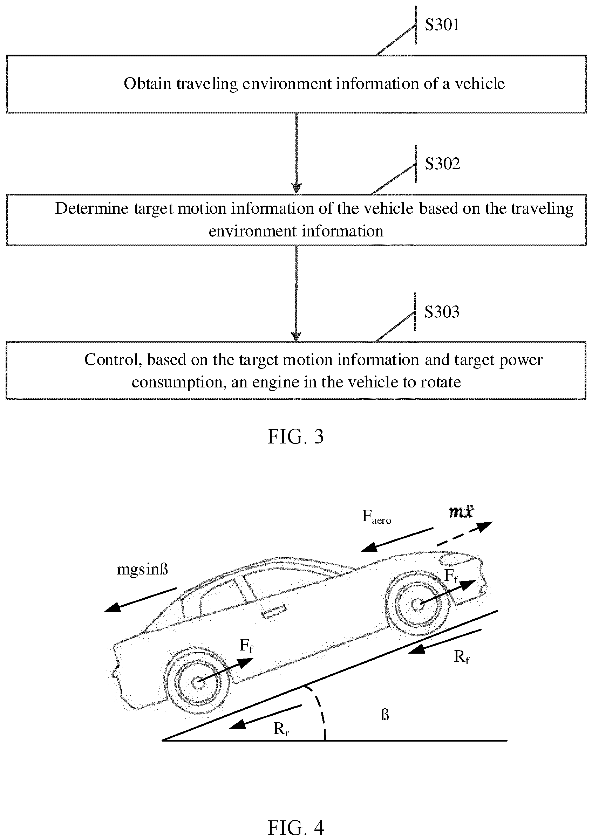

For example, FIG. 3 is a schematic diagram of an energy management method according to an embodiment of this application. The method may be applied to an energy management apparatus, and the method includes the following steps.

S301: Obtain traveling environment information of a vehicle.

It should be understood that the "traveling environment information" in this embodiment of this application is information about a traveling environment of the vehicle within preset duration. The preset duration may be 10s, 30s, 60s, or the like. This is not specifically limited in embodiments of this application.

The traveling environment information may include a terrain parameter. For example, the terrain parameter may include a ground slope, a ground friction coefficient, a road curvature, and the like. This is not specifically limited in embodiments of this application.

In a possible implementation, the traveling environment information may further include obstacle information, road construction information, weather information, and road attribute information (for example, a level, a material, a type, a width, and the like). This is not specifically limited in embodiments of this application.

There are a plurality of implementations of obtaining the traveling environment information of the vehicle, including but not limited to the following manners.

Manner 1: Obtain the traveling environment information of the vehicle by using a high-definition map.

In a possible implementation, when the traveling environment information includes the terrain parameter, a process in which the energy management apparatus obtains the traveling environment information of the vehicle by using the high-definition map may be: determining a road surface material of a first road surface based on semantic information of the high-definition map, and determining the terrain parameter based on a mapping relationship between the road surface material and the terrain parameter. The "first road surface" may be understood as a road surface of any one of a plurality of candidate paths for the vehicle 100 to reach a destination, and may be specifically all or some road surfaces corresponding to the any one path. This is not specifically limited in embodiments of this application.

For example, refer to Table 1. In Table 1, an example in which the terrain parameter is a friction coefficient is used. Table 1 shows a mapping relationship between the road surface material and the friction coefficient. In Table 1, the friction coefficient includes a rolling friction coefficient and a sliding friction coefficient. As shown in Table 1, in a case in which the road surface material of the first road surface of the vehicle is concrete, when the first road surface is not worn, the rolling friction coefficient of the first road surface is 0.01, and the sliding friction coefficient of the first road surface is 1; or when the first road surface is worn, the rolling friction coefficient of the first road surface is 0.02, and the sliding friction coefficient of the first road surface is 0.6.

Optionally, in a case in which the road surface material of the first road surface of the vehicle is asphalt, when the first road surface is not worn, the rolling friction coefficient of the first road surface is 0.012, and the sliding friction coefficient of the first road surface is 0.9; or when the first road surface is worn, the rolling friction coefficient of the first road surface is 0.022, and the sliding friction coefficient of the first road surface is 0.6.

Optionally, in a case in which the road surface material of the first road surface of the vehicle is crushed stones, when the first road surface is not worn, the rolling friction coefficient of the first road surface is 0.015, and the sliding friction coefficient of the first road surface is 0.9; or when the first road surface is worn, the rolling friction coefficient of the first road surface is 0.037, and the sliding friction coefficient of the first road surface is 0.6.

Optionally, in a case in which the road surface material of the first road surface of the vehicle is farmland, when the first road surface is not worn, the rolling friction coefficient of the first road surface is 0.1, and the sliding friction coefficient of the first road surface is 0.9; or when the first road surface is worn, the rolling friction coefficient of the first road surface is 0.35, and the sliding friction coefficient of the first road surface is 0.45.

Optionally, in a case in which the road surface material of the first road surface of the vehicle is clay, when the first road surface is not worn, the rolling friction coefficient of the first road surface is 0.055, and the sliding friction coefficient of the first road surface is 0.4; or when the first road surface is worn, the rolling friction coefficient of the first road surface is 0.180, and the sliding friction coefficient of the first road surface is 0.3.

Optionally, in a case in which the road surface material of the first road surface of the vehicle is gravel, when the first road surface is not worn, the rolling friction coefficient of the first road surface is 0.1, and the sliding friction coefficient of the first road surface is 0.35; or when the first road surface is worn, the rolling friction coefficient of the first road surface is 0.15, and the sliding friction coefficient of the first road surface is 0.2.

Optionally, in a case in which the road surface material of the first road surface of the vehicle is dunes, when the first road surface is not worn, the rolling friction coefficient of the first road surface is 0.16, and the sliding friction coefficient of the first road surface is 0.3; or when the first road surface is worn, the rolling friction coefficient of the first road surface is 0.3, and the sliding friction coefficient of the first road surface is 0.15.

**Table 1**

| Road surface material | Rolling friction coefficient | | Sliding friction coefficient | |
|---|---|---|---|---|
| | Not worn | Worn | Not worn | Worn |
| Concrete | 0.010 | 0.020 | 1.00 | 0.6 |
| Asphalt | 0.012 | 0.022 | 0.9 | 0.6 |
| Crushed stones | 0.015 | 0.037 | 0.9 | 0.6 |
| Farmland | 0.100 | 0.350 | 0.7 | 0.45 |
| Clay | 0.055 | 0.180 | 0.4 | 0.30 |
| Gravel | 0.100 | 0.150 | 0.35 | 0.20 |
| Dunes | 0.160 | 0.300 | 0.3 | 0.15 |

In another possible implementation, when the terrain parameter included in the traveling environment information is a friction coefficient of a road surface, the energy management apparatus may alternatively determine a road surface material of a first road surface and weather information based on semantic information of the high-definition map, and determine a friction coefficient of the first road surface based on a mapping relationship among the road surface material, the weather information, and the friction coefficient.

For example, refer to Table 2. Table 2 shows a mapping relationship among the road surface material, the weather information, and the friction coefficient. After obtaining the road surface material of the first road surface and the weather information by using the high-definition map, the energy management apparatus may obtain the road surface material of the first road surface through matching with Table 2.

**Table 2**

| Road surface material | Rolling friction coefficient | | Sliding friction coefficient | |
|---|---|---|---|---|
| | Not worn | Worn | Not worn | Worn |
| Concrete | 0.010 (sunny) 0.009 (rainy) 0.006 (snowy) | 0.020 (sunny) 0.019 (rainy) 0.016 (snowy) | 1.00 (sunny) 0.90 (rainy) 0.65 (sunny) | 0.6 (sunny) 0.5 (rainy) 0.3 (snowy) |
| Asphalt | 0.012 (sunny) 0.010 (rainy) 0.004 (snowy) | 0.022 (sunny) 0.020 (rainy) 0.016 (snowy) | 0.90 (sunny) 0.8 (rainy) 0.55 (snowy) | 0.6 (sunny) 0.5 (rainy) 0.4 (snowy) |
| Crushed stones | 0.015 (sunny) 0.009 (rainy) 0.006 (snowy) | 0.037 (sunny) 0.009 (rainy) 0.006 (snowy) | 0.9 (sunny) 0.7 (rainy) 0.6 (snowy) | 0.6 (sunny) 0.5 (rainy) 0.4 (snowy) |
| Farmland | 0.100 (sunny) 0.09 (rainy) 0.06(snowy) | 0.350 (sunny) 0.200 (rainy) 0.100 (snowy) | 0.7 (sunny) 0.5 (rainy) 0.3 (snowy) | 0.45 (sunny) 0.35 (rainy) 0.2 (snowy) |
| Clay | 0.055 (sunny) 0.035 (rainy) 0.020 (snowy) | 0.180 (sunny) 0.100 (rainy) 0.040 (snowy) | 0.4 (sunny) 0.35 (rainy) 0.16 (snowy) | 0.30 (sunny) 0.25 (rainy) 0.10 (snowy) |
| Gravel | 0.100 (sunny) 0.080 (rainy) 0.020 (snowy) | 0.150 (sunny) 0.120 (rainy) 0.076 (snowy) | 0.35 (sunny) 0.30 (rainy) 0.15 (snowy) | 0.20 (sunny) 0.10 (rainy) 0.05 (snowy) |
| Dunes | 0.160 (sunny) 0.120 (rainy) 0.040 (snowy) | 0.300 (sunny) 0.20 (rainy) 0.006 (snowy) | 0.30 (sunny) 0.25 (rainy) 0.10 (snowy) | 0.15 (sunny) 0.10 (rainy) 0.06 (snowy) |

It should be understood that the types of the road surface materials in Table 1 and Table 2 are merely examples. In practice, there may further be a plurality of types of road surface materials. In addition, the friction coefficients corresponding to the various road surface materials in Table 1 and Table 2 are merely examples. In practice, the friction coefficients corresponding to the various road surface materials may further have other values. This is not specifically limited in embodiments of this application.

It should be noted that, when the terrain parameter in the traveling environment information includes the ground slope and the road curvature, the energy management apparatus may directly determine a ground slope and a road curvature of the first road surface based on the semantic information of the high-definition map.

In Manner 1, accuracy of the terrain parameter that is of the first road surface of the vehicle, obtained by using the high-definition map is higher.

Manner 2: Obtain the traveling environment information of the vehicle by using a roadside device.

In a possible implementation, when the traveling environment information includes the terrain parameter, the energy management apparatus may collect point cloud data and image information of a first road surface by using the roadside device, perform semantic recognition on the image information, and determine a road surface material of the first road surface with reference to the point cloud data. Then, the energy management apparatus may determine the terrain parameter based on a mapping relationship between the road surface material and the terrain parameter. The "first road surface" may be understood as a road surface of any one of a plurality of candidate paths for the vehicle 100 to reach a destination, and may be specifically all or some road surfaces corresponding to the any one path. This is not specifically limited in embodiments of this application.

It should be understood that, a specific implementation, in Manner 2, in which the energy management apparatus determines the terrain parameter based on the mapping relationship between the road surface material and the terrain parameter is similar to that in Manner 1. Refer to the foregoing description. Details are not described herein again.

In Manner 2, the terrain parameter of the traveling environment is obtained by using the roadside device. As a result, a calculation amount of the vehicle can be effectively reduced.

Manner 3: Obtain the traveling environment information of the vehicle by using the high-definition map and the roadside device.

In a possible implementation, the roadside device may capture a road surface image of a first road surface, and the high-definition map may obtain semantic information of the first road surface. The energy management apparatus fuses the semantic information and the road surface image, determines a road surface material of the first road surface, and determines the terrain parameter based on a mapping relationship between the road surface material and the terrain parameter. The "first road surface" may be understood as a road surface of any one of a plurality of candidate paths for the vehicle 100 to reach a destination, and may be specifically all or some road surfaces corresponding to the any one path. This is not specifically limited in embodiments of this application.

In Manner 3, the terrain parameter of the traveling environment of the vehicle within the preset duration is obtained by using the high-definition map and the roadside device. As a result, the determined terrain parameter is more accurate.

It should be understood that, a specific implementation, in Manner 3, in which the energy management apparatus determines the terrain parameter based on the mapping relationship between the road surface material and the terrain parameter is similar to that in Manner 1. Refer to the foregoing description. Details are not described herein again.

Manner 4: Obtain the traveling environment information of the vehicle by using historical motion information of the vehicle on a first road surface.

In a possible implementation, when the traveling environment information includes the terrain parameter, the energy management apparatus may obtain the historical motion information of the vehicle on the first road surface. The historical motion information includes a historical traveling path, a historical traveling speed, a historical traveling acceleration, and a first terrain parameter of the first road surface. Then, the energy management apparatus may determine predicted motion information of the vehicle based on the first terrain parameter, and correct the first terrain parameter based on information about a difference between the predicted motion information and the historical motion information, to obtain a second terrain parameter. The energy management apparatus uses second terrain parameter as a terrain parameter of the first road surface. The "first road surface" may be understood as a road surface of any one of a plurality of candidate paths for the vehicle 100 to reach a destination, and may be specifically all or some road surfaces corresponding to the any one path. This is not specifically limited in embodiments of this application.

In Manner 4, the terrain parameter of the first road surface can be quickly determined based on the historical motion information of the vehicle.

In Manner 1, Manner 2, Manner 3, and Manner 4, the terrain parameter of the traveling environment is obtained. As a result, the traveling environment information includes abundant information, and target motion information determined based on the traveling environment information is more consistent with an actual traveling situation of the vehicle.

It should be understood that Manner 1, Manner 2, Manner 3, and Manner 4 may be used in combination, or may be used separately.

S302: Determine target motion information of the vehicle based on the traveling environment information.

The target motion information may include a preset speed, a preset traveling path, and a preset acceleration of the vehicle.

The "target motion information" in this embodiment of this application may be understood as a motion status of the vehicle within the preset duration. The preset speed may include a speed corresponding to each moment that is within the preset duration. The preset acceleration may include an acceleration corresponding to each moment that is within the preset duration. The preset traveling path is a path on which the vehicle is to travel within the preset duration. For example, the preset speed may be [v1, v2, ..., vn], and the preset acceleration may be [a1, a2, ..., an].

Optionally, the target motion information of the vehicle is determined based on the terrain parameter.

The following describes implementations of determining the parameters in the target motion information.

1. Preset traveling path

In a possible implementation, the energy management apparatus may obtain a current position of the vehicle, determine the plurality of candidate paths based on the current position and the destination of the vehicle, and obtain a plurality of traffic elements on each of the plurality of candidate paths. The traffic elements may include a path mileage, road condition information, time consumed for a distance, weather information, a user preference, and the like. Then, the energy management apparatus may calculate a utility value of each path based on weight information corresponding to each of the plurality of traffic elements, and use a traveling path with a greatest utility value as the preset traveling path of the vehicle. The current position of the vehicle may be determined by using the high-definition map. It should be understood that the "destination" may be a merging point of a target lane or a fixed location. This is not specifically limited in embodiments of this application.

For example, the vehicle is currently at a position A, there are three candidate paths for the vehicle from the position A to a destination B, and traffic elements of the three candidate paths include road condition information and weather information. A weight corresponding to road condition information of a candidate path 1 is 0.5, and a score corresponding to the road condition information is 30. A weight corresponding to weather information of the candidate path 1 is 0.5, and a score corresponding to the weather information is 80. In this case, a utility value of the candidate path 1 is 60. A weight corresponding to road condition information of a candidate path 2 is 0.5, and a score corresponding to the road condition information is 50. A weight corresponding to weather information of the candidate path 2 is 0.5, and a score corresponding to the weather information is 50. In this case, a utility value of the candidate path 2 is 50. A weight corresponding to road condition information of a candidate path 3 is 0.5, and a score corresponding to the road condition information is 80. A weight corresponding to weather information of a candidate path 3 is 0.5, and a score corresponding to the weather information is 90. In this case, a utility value of the candidate path 3 is 85. Then, the energy management apparatus uses the candidate path 3 as the preset traveling path.

In this implementation, the plurality of traffic elements of the candidate paths are comprehensively considered, so that the determined preset traveling path can be more accurate.

2. Preset speed and preset acceleration

In a possible implementation, the energy management apparatus may determine reference motion information based on the destination and the historical motion information of the vehicle. The reference motion information includes a first traveling path and a first speed. The energy management apparatus inputs the first traveling path, the first speed, the terrain parameter, and current motion information of the vehicle to a vehicle motion model, to obtain the preset speed and the preset acceleration of the vehicle.

It should be understood that the historical motion information includes a path on which the vehicle has traveled so far, a historical speed, a historical acceleration, and the like, and the reference motion information includes the first traveling path and the first speed. The "historical motion information" may be understood as a traveling path on which the vehicle has traveled within specific duration, a traveling speed and a traveling acceleration with which the vehicle has traveled within the specific duration, and the like. The "reference motion information" may be understood as motion information, in an ideal state, that is predicted based on the "historical motion information". The "current motion information" may be understood as a traveling speed and a traveling acceleration of the vehicle at a current moment. The "destination" may be a merging point of a target lane or a fixed location. This is not specifically limited in embodiments of this application.

For example, FIG. 4 shows a vehicle motion model to which an embodiment of this application is applicable. After obtaining the reference motion information, the energy management apparatus inputs the reference motion information, the terrain parameter, and the current motion information of the vehicle to the vehicle motion model, to obtain the preset speed and the preset acceleration.

The vehicle motion model may satisfy the following formulas:

$$X_{t+1} = \mathrm{A}X_t + \mathrm{B}u_t + \mathrm{C};$$

$$\mathrm{m}\ddot{x} = F_f + F_r - F_{aero} - R_f - R_r - mg\sin\beta;$$

$$F_{load} = F_{aero} + R_f + R_r + mg\sin\beta;$$

$$F_{aero} = {}^1\!/_2\, C_a \rho A \dot{x}^2 = C_a \dot{x}^2;\text{ }$$

and

$$R_x = N\big(c_{r,0} + c_{r,1}|\dot{x}| + c_{r,2}\dot{x}^2\big)$$

$X_t$ = [x, y, z, v, θ] represents motion information of the vehicle at a moment t. [x, y, z] represents a position parameter of the vehicle at the moment t. v represents a preset speed of the vehicle at the moment t. θ represents a yaw angle of the vehicle at the moment t. $X_{t+1}$ represents motion information of the vehicle at a moment t+1. $u_t$ represents a control signal of the vehicle at the moment t (that is, a speed control signal determined based on the first speed in the reference motion information). A, B, and C are motion coefficients of the vehicle, and the motion coefficient of the vehicle may be determined based on a mapping relationship between a vehicle type and the motion coefficient.

$\ddot{x}$ represents the preset acceleration of the vehicle, $\dot{x}$ represents the preset speed of the vehicle. $F_f$ represents a front wheel propulsion force of the vehicle. $F_r$ represents a rear wheel propulsion force of the vehicle. $F_{aero}$ represents

an air resistance force. $R_f$ represents a front wheel rolling friction resistance force of the vehicle. $R_r$ represents a rear wheel rolling friction resistance force of the vehicle, $mg\sin\beta$ represents a weight component of the vehicle. $C_a\rho A$ represents an air resistance force coefficient.

It should be understood that, $R_f$ and $R_r$ may be determined based on a rolling friction coefficient in the terrain parameter.

The preset speed v and the preset acceleration $\ddot{x}$ of the vehicle within the preset duration may be determined by using the foregoing formulas. In this way, the reference motion information and the terrain parameter are combined to determine the preset speed and the preset acceleration of the vehicle that are within the preset duration, so that the determined preset speed and the preset acceleration are more consistent with the actual traveling situation of the vehicle, and the target motion information is more accurate.

S303: Control, based on the target motion information and target power consumption, an engine in the vehicle to rotate.

In this embodiment of this application, the "target power consumption" may be understood as target power consumption for the vehicle to implement the target motion information. Therefore, before controlling, based on the target motion information and the target power consumption, the engine in the vehicle to rotate, the energy management apparatus further needs to determine the target power consumption corresponding to the target motion information. The power consumption in this embodiment of this application may be indicated by a state of charge (state of charge, SOC) change value. It should be understood that an SOC value may indicate a power status. If the SOC value is 100%, it indicates that an on-board battery is fully charged. If the SOC value is 0%, it indicates that an on-board battery runs out of power.

There are a plurality of implementations of determining the target power consumption corresponding to the target motion information, including but not limited to the following implementations.

Implementation 1: The energy management apparatus determines the target power consumption based on a mapping relationship between a distance of the preset traveling path and the target power consumption.

For example, the target power consumption is quantified by using the SOC change value, and the mapping relationship between the distance of the preset traveling path and the target power consumption is shown in Table 3. If the distance of the preset traveling path is 25 km, the SOC change value corresponding to the target power consumption is 20%.

**Table 3**

| Distance of a preset traveling path | Target power consumption (SOC change value) |
|---|---|
| 1-10 km | 10% |
| 11-30 km | 20% |
| 31-60 km | 40% |

In Implementation 1, the target power consumption may be quickly determined based on the distance of the preset traveling path.

Implementation 2: The energy management apparatus determines the target power consumption based on a mapping relationship between the target power consumption, and the preset speed and the preset traveling path.

One preset traveling path may correspond to different preset speeds. For example, the preset traveling path is 100 km. As shown in Table 4, if the vehicle has traveled the 100 km traveling path with a preset speed of 20 km/h, the SOC change value corresponding to the target power consumption is 10%; if the vehicle has traveled the 100 km traveling path with a preset acceleration of 40 km/h, the SOC change value corresponding to the target power consumption is 20%; or if the vehicle has traveled the 100 km traveling path with a preset acceleration of 60 km/h, the SOC change value corresponding to the target power consumption is 40%.

**Table 4**

| Preset speed | Target power consumption (SOC change value) |
|---|---|
| 20-39 km/h | 10% |
| 40-59 km/h | 20% |
| 60-80 km/h | 40% |

In Implementation 2, the determined target power consumption is more accurate.

Implementation 3: The energy management apparatus determines the target power consumption based on a mapping relationship between the target power consumption, and the preset acceleration and the preset traveling path.

One preset traveling path may correspond to preset accelerations with different peak values. For example, the distance of the preset traveling path is 100 km. As shown in Table 5, if the vehicle travels on the 100 km traveling path with a preset acceleration not exceeding 5 m/s^2, the SOC change value corresponding to the target power consumption is 10%; if the vehicle travels on the 100 km traveling path with a preset acceleration not exceeding 8 m/s^2, the SOC change value corresponding to the target power consumption is 20%; or if the vehicle travels on the 100 km traveling path with a preset acceleration not exceeding 10 m/s^2, the SOC change value corresponding to the target power consumption is 40%.

**Table 5**

| Peak value of a preset acceleration | Target power consumption (SOC change value) |
| --- | --- |
| 5 m/s^2 | 10% |
| 8 m/s^2 | 20% |
| 10 m/s^2 | 40% |

In Implementation 3, the determined target power consumption is more accurate.

In a possible implementation, a process in which the energy management apparatus controls, based on the target motion information and the target power consumption, the engine in the vehicle to rotate may be: determining a first control signal based on the preset speed, the preset traveling path, and the target power consumption, and controlling, based on the first control signal, the engine to rotate. In this implementation, the engine in the vehicle may be controlled, based on the preset speed, the preset traveling path, and the target power consumption, to rotate. In this way, a battery management system manages an on-board battery in advance, and a loss of the on-board battery caused by sudden acceleration or deceleration of the vehicle is effectively reduced.

It should be understood that the "first control signal" in this embodiment of this application may be a set of a plurality of control signals, for example, a set of a speed control signal and a motor control signal.

It should be noted that new energy vehicles may be classified into all-electric vehicles and hybrid vehicles based on power sources of the new energy vehicles. Specific implementations of controlling, based on the first control signal, the engine to rotate are different for different types of new energy vehicles. The following provides descriptions for different cases.

Case 1: All-electric vehicle

For the all-electric vehicle, a process in which the energy management apparatus may control, based on the first control signal, the engine to rotate may be: determining a target rotational speed and a target torque of the engine based on the first control signal; determining a first state of charge SOC value after battery optimization, based on the target rotational speed and the target torque of the engine, a current torque and a current rotational speed of the engine, a SOC change value of the battery in the vehicle within the preset duration, and a current SOC value and a target SOC value of the battery; and determining a first load power corresponding to the first SOC value, determining a second control signal corresponding to the first load power, and controlling, based on the second control signal, the engine to rotate.

For example, the energy management apparatus may determine the first SOC value after battery optimization, based on the following formulas:

$$J(SOC(t), u(t)) = min\left\{\int_{t_0}^{t_k}\left(w_s(SOC(t) - SOC_r)^2 + w_t\left(\Delta T_e(t)\right)^2 + w_w\left(\Delta\omega_e(t)\right)^2\right)dt + w_h SOC(t_h)\right\};$$

$$\Delta T_e(t) = T_{e\_d} - T_e;$$

$$\Delta\omega_e(t) = T_{e\_d} - T_e;$$

and

$$u(t) = [\Delta T_e(t), \Delta \omega_e(t)]$$

$T_e$ represents the current torque of the engine. $\omega_e$ represents the current rotational speed of the engine. $T_{e_d}$ represents the target torque of the engine. $\omega_{e_d}$ represents the target rotational speed of the engine. SOC(t) represents the current SOC value of the battery. $SOC_r$ represents the target SOC value. $w_s$ represents a weight coefficient of the SOC change value. $\Delta T_e(t)$ represents a difference between the current torque and the target torque of the engine. $w_t$ represents a weight coefficient of a torque change value.

$\Delta \omega_e(t)$ represents a difference between the current rotational speed and the target rotational speed of the engine. $w_w$ represents a weight coefficient of a rotational speed change. $SOC(t_h)$ represents a SOC value from a moment $t_0$ to a moment $t_k$. $w_h$ represents a global weight coefficient. J represents a sum of optimization equations. $u(t)$ represents an optimization term for the torque of the engine and an optimization term for the rotational speed of the engine. SOC(t) represents an optimization term for the SOC value.

The foregoing formulas are solved, to obtain a SOC value at the moment t, namely, the first SOC value after optimization. Then, the energy management apparatus may determine the first load power corresponding to the first SOC value, determine the second control signal corresponding to the first load power, and control, based on the second control signal, the engine to rotate. It should be understood that the SOC value is a power status of the on-board battery at the moment t.

A process in which the energy management apparatus determines the first load power corresponding to the first SOC value may be determining based on a mapping relationship between a preset SOC value and the first load power. For example, the mapping relationship may be shown in Table 6. If the first SOC value that exists after optimization and that is of the vehicle 10%, the first load power is 0.4; if the first SOC value that exists after optimization and that is of the vehicle is 20%, the first load power is 0.6; or if the first SOC value that exists after optimization and that is of the vehicle is 40%, the first load power is 1.

**Table 6**

| Load power | First SOC value |
|---|---|
| 0.4 | 10% |
| 0.6 | 20% |
| 1 | 40% |

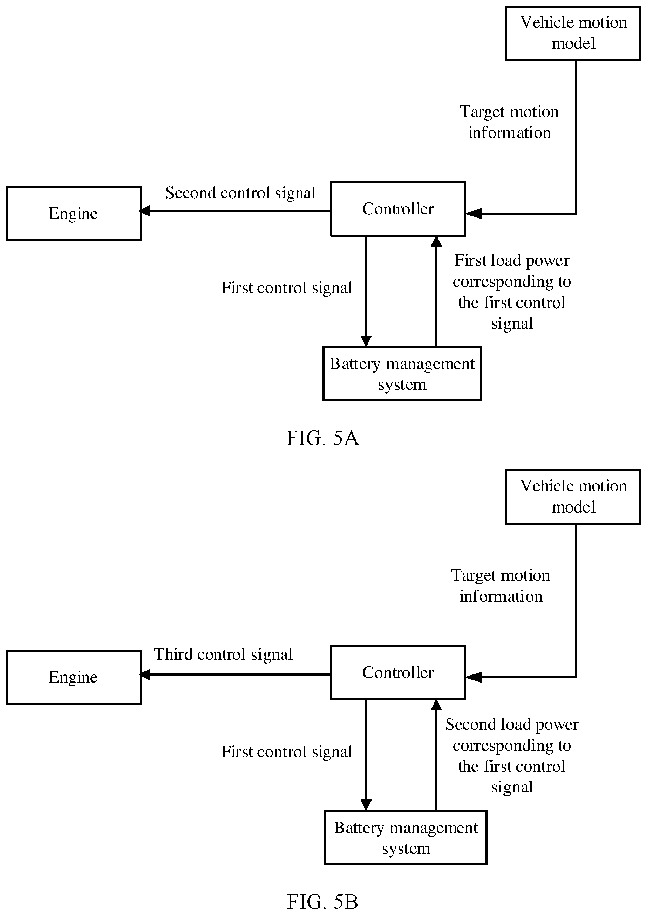

For example, refer to FIG. 5A. In FIG. 5A, after obtaining the target motion information, a vehicle dynamics model sends the target motion information to a controller. The controller determines the first control signal based on the target motion information, and sends the first control signal to the battery management system. The battery management system determines the first SOC value after battery optimization, based on the first control signal, determines the first load power corresponding to the first SOC value, and sends the first load power to the controller. Then, the controller determines the second control signal corresponding to the first load power, and controls, based on the second control signal, the engine to rotate.

Case 2: Hybrid vehicle

For the hybrid vehicle, a process in which the energy management apparatus controls, based on the first control signal, the engine to rotate may be: determining a target rotational speed and a target torque of the engine based on the first control signal; determining a second SOC value after battery optimization and a target weight of fuel based on the target rotational speed and the target torque of the engine, a current torque and a current rotational speed of the engine, a SOC change value of the battery in the vehicle within the preset duration, a current SOC value and a target SOC value of the battery, and a current weight of the fuel in the vehicle; and determining a second load power that corresponds to the second SOC value and the target weight of the fuel, determining a third control signal corresponding to the second load power, and controlling, based on the third control signal, the engine to rotate.

For example, the energy management apparatus may determine the second SOC value after battery optimization and the target weight of the fuel based on the following formulas:

$$J(SOC(t), u(t), \dot{m}_f(t)) = min\left\{\int_{t_0}^{t_k} \left((w_s(SOC(t) - SOC_r)^2 + w_m\left(\dot{m}_f(t)\right)^2 + \right.\right.$$

$$\left.\left. w_t\left(\Delta T_e(t)\right)^2 + w_w\left(\Delta\omega_e(t)\right)^2\right) dt + w_h SOC(t_h)\right\};$$

$$\Delta T_e(t) = T_{e\_d} - T_e;$$

$$\Delta\omega_e(t) = T_{e\_d} - T_e;$$

and

$$u(t) = [\Delta T_e(t), \Delta\omega_e(t)]$$

$T_e$ represents the current torque of the engine. $\omega_e$ represents the current rotational speed of the engine. $T_{e_d}$ represents the target torque of the engine. $\omega_{e_d}$ represents the target rotational speed of the engine. SOC(t) represents the current SOC value of the battery. $SOC_r$ represents the target SOC value. $w_s$ represents a weight coefficient of the SOC change value. $\dot{m}_f(t)$ represents a weight of fuel at a moment $t$. $\Delta T_e(t)$ represents a difference between the current torque and the target torque of the engine.

$w_t$ represents a weight coefficient of a torque change value. $\Delta\omega_e(t)$ represents a difference between the current rotational speed and the target rotational speed of the engine. $w_w$ represents a weight coefficient of a rotational speed change. $SOC(t_h)$ represents a SOC value from a moment $t_0$ to a moment $t_k$. $w_h$ represents a global weight coefficient. J represents a sum of optimization equations. $u(t)$ represents an optimization term for the torque of the engine and an optimization term for the rotational speed of the engine. $SOC(t)$ represents an optimization term for the SOC value. $\dot{m}_f(t)$ represents an optimization term of the weight of the fuel.

In the foregoing manner, the second SOC value after optimization and the target weight of the fuel $\dot{m}_f$ may be obtained. The second SOC value after battery optimization is close to the target SOC value $SOC_r$. The target weight of the fuel $\dot{m}_f$ is as low as possible. In this way, energy control of the vehicle is effectively implemented, and energy consumption of the vehicle is effectively reduced. In addition, the first SOC value is close to the target SOC value $SOC_r$, so that overcharging or overdischarging of the battery in the vehicle can be effectively avoided. In this way, use of the fuel is reduced, and electric energy is provided as much as possible as energy required for the engine to rotate, so that the vehicle can move along the preset traveling path with the preset speed and the preset acceleration. This facilitates environmentally-friendly running of the vehicle.

For example, refer to FIG. 5B. In FIG. 5B, after obtaining the target motion information, a vehicle dynamics model sends the target motion information to a controller. The controller determines the first control signal based on the target motion information, and sends the first control signal to the battery management system. The battery management system determines, based on the first control signal, a first SOC value after battery optimization, determines a first load power corresponding to the first SOC value, and sends the second load power to the controller. Then, the controller determines the second control signal corresponding to the second load power, and controls, based on the third control signal, the engine to rotate.

It should be understood that the controllers in FIG. 5A and FIG. 5B may be a vehicle controller or a domain controller. This is not specifically limited in embodiments of this application.

In the embodiment shown in FIG. 3, the target motion information of the vehicle is predicted based on the traveling environment information (that is, the terrain parameter) of the vehicle, and the engine in the vehicle is controlled, based on the target motion information and the target power consumption, to rotate. In this way, power balance of the on-board battery can be implemented, and a loss of the on-board battery can be effectively reduced. As a result, the on-board battery is protected, and energy utilization efficiency of the new energy vehicle is improved.

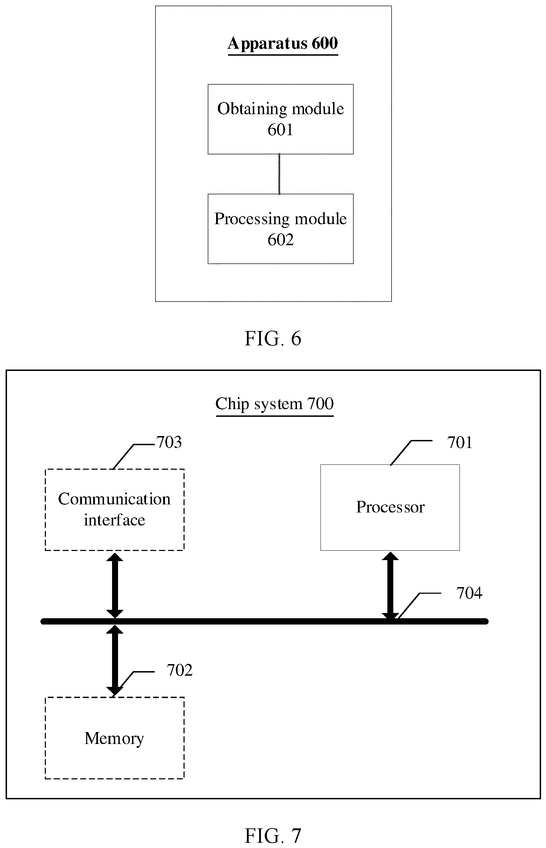

FIG. 6 is a schematic diagram of a possible structure of the energy management apparatus in the foregoing embodiments of this application.

For example, an apparatus 600 includes:

an obtaining module 601, configured to obtain traveling environment information of a vehicle, where the traveling environment information includes a terrain parameter; and
a processing module 602, configured to determine target motion information of the vehicle based on the traveling environment information, where the target motion information includes a preset speed, a preset acceleration, and a preset traveling path.

The processing module 602 is further configured to control, based on the target motion information and target power consumption, an engine in the vehicle to rotate.

It should be understood that the "traveling environment information" in this embodiment of this application is information about a traveling environment of the vehicle within preset duration. The preset duration may be 10s, 30s, 60s, or the like. This is not specifically limited in this application. The "target motion information" in this embodiment of this application may be understood as a motion status of the vehicle within the preset duration. The preset speed may include a speed corresponding to each moment that is within the preset duration. The preset acceleration may include an acceleration corresponding to each moment that is within the preset duration. The preset traveling path is a path on which the vehicle is to travel within the preset duration.

In a possible implementation, the terrain parameter is obtained by using a high-definition map and/or a roadside device.

In a possible implementation, the processing module 602 is further configured to: determine a first control signal based on the target motion information and the target power consumption; and control, based on the first control signal, the engine to rotate.

In a possible implementation, the processing module 602 is further configured to: determine a target rotational speed and a target torque of the engine based on the first control signal; determine a first state of charge SOC value after battery optimization, based on the target rotational speed and the target torque of the engine, a current torque and a current rotational speed of the engine, a SOC change value of the battery in the vehicle within the preset duration, and a current SOC value and a target SOC value of the battery; and determine a first load power corresponding to the first SOC value, determine a second control signal corresponding to the first load power, and control, based on the second control signal, the engine to rotate.

In a possible implementation, the processing module 602 is further configured to: determine a target rotational speed and a target torque of the engine based on the first control signal; determine a second SOC value after battery optimization and a target weight of fuel based on the target rotational speed and the target torque of the engine, a current torque and a current rotational speed of the engine, a SOC change value of the battery in the vehicle within the preset duration, a current SOC value and a target SOC value of the battery, and a current weight of the fuel in the vehicle; and determine a second load power that corresponds to the second SOC value and the target weight of the fuel, determine a third control signal corresponding to the second load power, and control, based on the third control signal, the engine to rotate.

In a possible implementation, the processing module 602 is further configured to: determine reference motion information based on a destination and historical motion information of the vehicle, where the reference motion information includes a first traveling path and a first speed; and input the reference motion information, the terrain parameter, and current motion information of the vehicle to a vehicle motion model, to obtain the target motion information.

The "destination" may be understood as a fixed location or a target lane. This is not specifically limited in embodiments of this application. The "historical motion information" may be understood as a traveling path on which the vehicle has traveled within specific duration, a traveling speed and a traveling acceleration with which the vehicle has traveled within the specific duration, and the like. The "reference motion information" may be understood as motion information, in an ideal state, that is predicted based on the "historical motion information". The "current motion information" may be understood as a traveling speed and a traveling acceleration of the vehicle at a current moment.

In a possible implementation, the obtaining module 601 is further configured to: determine a road surface material of a first road surface based on semantic information of the high-definition map, and determine the terrain parameter based on a mapping relationship between the road surface material and the terrain parameter. The first road surface is a road surface of any one of a plurality of candidate paths for the vehicle to reach the destination. The semantic information of the high-definition map may include road attribute information, an area in which a GPS signal disappears, a road construction status, and the like. This is not specifically limited in embodiments of this application.

In a possible implementation, the apparatus may be a chip or an integrated circuit.

In a possible implementation, the apparatus may be a target vehicle or a server.

An embodiment of this application further provides a vehicle. The vehicle may include a processor. The processor is configured to perform the energy management method in the embodiment shown in FIG. 3.

In a possible implementation, the vehicle further includes a memory, and the memory is configured to store a computer program or instructions.

In a possible implementation, the vehicle further includes a transceiver, and the transceiver is configured to receive or send information.

An embodiment of this application further provides a server. The server includes a processor. The processor is configured to perform the energy management method in the embodiment shown in FIG. 3.

In a possible implementation, the server further includes a memory, and the memory is configured to store a computer program or instructions.

In a possible implementation, the server further includes a transceiver, and the transceiver is configured to receive or send information.

In a possible implementation, the server is a single server or a server cluster including a plurality of sub-servers. When the server is a server cluster including a plurality of sub-servers, the plurality of sub-servers jointly perform the foregoing energy management method.

An embodiment of this application further provides a chip system. Refer to FIG. 7. A chip system 700 includes at least one processor. When program instructions are executed in the at least one processor 701, the energy management method in the embodiment shown in FIG. 3 is implemented.

In a possible implementation, the chip system further includes a communication interface 703, and the communication interface is configured to input or output information.

In a possible implementation, the chip system further includes a memory 702. The memory 702 is coupled to the processor through the communication interface 703, and the memory 702 is configured to store the foregoing instructions, so that the processor reads the instructions stored in the memory through the communication interface 703.

It should be understood that connection media between the processor 701, the memory 702, and the communication interface 703 are not limited in embodiments of this application. In FIG. 7 in this embodiment of this application, the memory 702, the processor 701, and the communication interface 703 are connected through a communication bus 704. The bus is represented by a thick line in FIG. 7. A manner of connection between other components is merely an example for description and is not limited. The bus may include an address bus, a data bus, a control bus, and the like. For ease of representation, only one thick line is used to represent the bus in FIG. 7, but it does not mean that there is only one bus, only one type of bus, or the like.

An embodiment of this application further provides a computer program product including instructions. When the computer program product runs on the foregoing apparatus, the energy management method in the embodiment shown in FIG. 3 is performed.

An embodiment of this application provides a computer-readable storage medium. The computer-readable storage medium stores a computer program, and when the computer program is run, the energy management method in the embodiment shown in FIG. 3 is implemented.

The foregoing embodiments may be combined with each other to achieve different technical effects.

The foregoing descriptions of implementations allow a person skilled in the art to clearly understand that, for the purpose of convenient and brief description, division into the foregoing functional modules is used as an example for illustration. In practice, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely for logical functions and may be division otherwise in practice. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or the units may be implemented in electrical, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of the embodiments.

In addition, functional units in the embodiments of this application may be integrated into one processing module, or each of the units may exist alone physically, or two or more units are integrated into one unit. The integrated unit may be implemented in a form of hardware, or may be implemented in a form of software functional unit.

Module division in the embodiments of this application is an example, is merely logical function division, and may be division otherwise in practice. In addition, functional modules in the embodiments of this application may be integrated into one processor, or each of the modules may exist alone physically, or two or more modules are integrated into one module. The integrated module may be implemented in a form of hardware, or may be implemented in a form of software functional module.

All or some of the methods in the embodiments of this application may be implemented by using software, hardware, firmware, or any combination thereof. When software is used to implement the embodiments, all or some of embodiments may be implemented in a form of computer program product. The computer program product includes one or more computer instructions. When the computer program instructions are loaded and executed on a computer, the procedure or the functions according to the embodiments of this application are all or partially generated. The computer may be a general-purpose computer, a special-purpose computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, microwave, or the like) manner. The computer-readable storage medium may be any usable medium accessible by the computer, or a data storage device like a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an S SD), or the like.

In the embodiments of this application, when there is no logical conflict, embodiments may be mutually referenced. For example, methods and/or terms between the method embodiments may be mutually referenced, for example, functions and/or terms between the apparatus embodiments may be mutually referenced, or for example, functions and/or terms between the apparatus embodiments and the method embodiments may be mutually referenced.

A person skilled in the art can make various modifications and variations to this application without departing from the scope of this application. This application is intended to cover these modifications and variations of this application provided that they fall within the scope of the claims of this application and equivalent technologies thereof.

**Claims**

1. An energy management method, comprising:

   obtaining traveling environment information of a vehicle, wherein the traveling environment information comprises a terrain parameter;
   determining target motion information of the vehicle based on the traveling environment information, wherein the target motion information comprises a preset speed, a preset acceleration, and a preset traveling path; and
   controlling, based on the target motion information and target power consumption, an engine in the vehicle to rotate.

2. The method according to claim 1, wherein the terrain parameter is obtained by using a high-definition map and/or a roadside device.

3. The method according to claim 1 or 2, wherein the controlling, based on the target motion information and target power consumption, an engine in the vehicle to rotate comprises:

   determining a first control signal based on the target motion information and the target power consumption; and
   controlling, based on the first control signal, the engine to rotate.

4. The method according to claim 3, wherein the controlling, based on the first control signal, the engine to rotate comprises:

   determining a target rotational speed and a target torque of the engine based on the first control signal;
   determining a first state of charge SOC value after battery optimization, based on the target rotational speed and the target torque of the engine, a current torque and a current rotational speed of the engine, a SOC change value of the battery in the vehicle within preset duration, and a current SOC value and a target SOC value of the battery; and
   determining a first load power corresponding to the first SOC value, determining a second control signal corresponding to the first load power, and controlling, based on the second control signal, the engine to rotate.

5. The method according to claim 3, wherein the controlling, based on the first control signal, the engine to rotate comprises:

   determining a target rotational speed and a target torque of the engine based on the first control signal;
   determining a second SOC value after battery optimization and a target weight of fuel based on the target rotational speed and the target torque of the engine, a current torque and a current rotational speed of the engine, a SOC change value of the battery in the vehicle within preset duration, a current SOC value and a target SOC value of the battery, and a current weight of the fuel in the vehicle; and
   determining a second load power that corresponds to the second SOC value and the target weight of the fuel, determining a third control signal corresponding to the second load power, and controlling, based on the third control signal, the engine to rotate.

6. The method according to any one of claims 1 to 5, wherein the determining target motion information of the vehicle based on the traveling environment information comprises:

determining reference motion information based on a destination and historical motion information of the vehicle, wherein the reference motion information comprises a first traveling path and a first speed; and
inputting the first traveling path, the first speed, the terrain parameter, and current motion information of the vehicle to a vehicle motion model, to obtain the target motion information.

7. The method according to claim 6, wherein the obtaining traveling environment information of a vehicle comprises:

determining a road surface material of a first road surface based on semantic information of the high-definition map, wherein the first road surface is a road surface of any one of a plurality of candidate paths for the vehicle to reach the destination; and
determining the terrain parameter based on a mapping relationship between the road surface material and the terrain parameter.

8. An energy management apparatus, comprising:

an obtaining module, configured to obtain traveling environment information of a vehicle, wherein the traveling environment information comprises a terrain parameter; and
a processing module, configured to determine target motion information of the vehicle based on the traveling environment information, wherein the target motion information comprises a preset speed, a preset acceleration, and a preset traveling path, wherein
the processing module is further configured to control, based on the target motion information and target power consumption, an engine in the vehicle to rotate.

9. The apparatus according to claim 8, wherein the terrain parameter is obtained by using a high-definition map and/or a roadside device.

10. The apparatus according to claim 8 or 9, wherein the processing module is further configured to:

determine a first control signal based on the target motion information and the target power consumption; and
control, based on the first control signal, the engine to rotate.

11. The apparatus according to claim 10, wherein the processing module is further configured to:

determine a target rotational speed and a target torque of the engine based on the first control signal;
determine a first state of charge SOC value after battery optimization, based on the target rotational speed and the target torque of the engine, a current torque and a current rotational speed of the engine, a SOC change value of the battery in the vehicle within preset duration, and a current SOC value and a target SOC value of the battery; and
determine a first load power corresponding to the first SOC value, determine a second control signal corresponding to the first load power, and control, based on the second control signal, the engine to rotate.

12. The apparatus according to claim 10, wherein the processing module is further configured to:

determine a target rotational speed and a target torque of the engine based on the first control signal;
determine a second SOC value after battery optimization and a target weight of fuel based on the target rotational speed and the target torque of the engine, a current torque and a current rotational speed of the engine, a SOC change value of the battery in the vehicle within preset duration, a current SOC value and a target SOC value of the battery, and a current weight of the fuel in the vehicle; and
determine a second load power that corresponds to the second SOC value and the target weight of the fuel, determine a third control signal corresponding to the second load power, and control, based on the third control signal, the engine to rotate.

**13.** The apparatus according to any one of claims 8 to 12, wherein the processing module is further configured to:

determine reference motion information based on a destination and historical motion information of the vehicle, wherein the reference motion information comprises a first traveling path and a first speed; and

input the first traveling path, the first speed, the terrain parameter, and current motion information of the vehicle to a vehicle motion model, to obtain the target motion information.

**14.** The apparatus according to any one of claims 8 to 13, wherein the obtaining module is further configured to:

determine a road surface material of a first road surface based on semantic information of the high-definition map, wherein the first road surface is a road surface of any one of a plurality of candidate paths for the vehicle to reach the destination; and

determine the terrain parameter based on a mapping relationship between the road surface material and the terrain parameter.

**15.** A vehicle, comprising a memory and a processor, wherein

the memory is configured to store a computer program; and

the processor is configured to execute a computer program stored in the memory, to implement the method according to any one of claims 1 to 7.

**16.** A server, wherein the server comprises a memory and a processor;

the memory is configured to store a computer program; and

the processor is configured to execute the computer program stored in the memory, to implement the method according to any one of claims 1 to 7.

**17.** A computer-readable storage medium, wherein the computer-readable storage medium stores a computer program, and when the computer program is run, the method according to any one of claims 1 to 7 is implemented.

**18.** A chip system, wherein the chip system comprises at least one processor, and when program instructions are executed in the at least one processor, the method according to any one of claims 1 to 7 is implemented.

**19.** A computer program product, wherein the computer program product comprises instructions, and when the instructions are run, the method according to any one of claims 1 to 7 is implemented.

FIG. 1

Server 200

Roadside device 300

Vehicle 100

FIG. 2A

**Vehicle 100**

Environment information →

On-board sensing and positioning module 101
- GNSS+ IMU
- Camera
- Laser radar
- ...

Local feature map →

**On-board high-definition map module 102**

Semantic parameter of a road environment →

**Controller 103**
- Speed and acceleration prediction
- Path planning

Speed control signal →

**Battery management system 104**
- BMS

Motor control signal →

**Engine**

FIG. 2B

EP 4 378 775 A1

S301

Obtain traveling environment information of a vehicle

S302

Determine target motion information of the vehicle based on the traveling environment information

S303

Control, based on the target motion information and target power consumption, an engine in the vehicle to rotate

FIG. 3

FIG. 4

Vehicle motion
model

Target motion
information

Second control signal

Engine ← Controller

First control signal

First load power
corresponding to
the first control
signal

Battery management
system

FIG. 5A

Vehicle motion
model

Target motion
information

Third control signal

Engine ← Controller

First control signal

Second load power
corresponding to
the first control
signal

Battery management
system

FIG. 5B

**Apparatus 600**

Obtaining module
601

Processing module
602

FIG. 6

Chip system 700

703

Communication
interface

701

Processor

704

702

Memory

FIG. 7

## INTERNATIONAL SEARCH REPORT

| International application No. |
| --- |
| **PCT/CN2022/107658** |

**A.    CLASSIFICATION OF SUBJECT MATTER**

B60W 20/13(2016.01)i;  B60W 40/10(2012.01)i;  B60W 40/06(2012.01)i;  B60W 40/068(2012.01)i;  B60W 40/072(2012.01)i;  B60W 40/076(2012.01)i;  B60W 10/06(2006.01)i;  B60L 58/12(2019.01)i

According to International Patent Classification (IPC) or to both national classification and IPC

**B.    FIELDS SEARCHED**

Minimum documentation searched (classification system followed by classification symbols)

B60W; B60L

Documentation searched other than minimum documentation to the extent that such documents are included in the fields searched

Electronic data base consulted during the international search (name of data base and, where practicable, search terms used)

CNTXT; VEN; CJFD; WPABSC; ENTXTC: 荷电状态, 电荷状态, 充电状态, 电量, 电力消耗, 电能消耗, 变化, 目标, 电池, 能量, 能源, 管理, SOC, state, charge, change, target, battery, energy, power, manag+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111409645 A (NINGBO GEELY AUTOMOBILE RESEARCH AND DEVELOPMENT CO., LTD. et al.) 14 July 2020 (2020-07-14) description, pages 4-8, and figures 1-6 | 1-3, 8-10, 15-19 |
| A | US 2021179061 A1 (HYUNDAI MOTOR CO., LTD. et al.) 17 June 2021 (2021-06-17) entire document | 1-19 |
| A | CN 112009455 A (BEIQI FOTON MOTOR CO., LTD.) 01 December 2020 (2020-12-01) entire document | 1-19 |
| A | CN 104554251 A (HENAN POLYTECHNIC UNIVERSITY) 29 April 2015 (2015-04-29) entire document | 1-19 |
| A | US 2019039596 A1 (TOYOTA MOTOR ENGINEERING & MANUFACTURING NORTH AMERICA, INC.) 07 February 2019 (2019-02-07) entire document | 1-19 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **09 October 2022** | **28 October 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107658**

| Patent document cited in search report | | | Publication date (day/month/year) | Patent family member(s) | | | Publication date (day/month/year) |
|---|---|---|---|---|---|---|---|
| CN | 111409645 | A | 14 July 2020 | None | | | |
| US | 2021179061 | A1 | 17 June 2021 | CN | 112977405 | A | 18 June 2021 |
| | | | | KR | 20210077066 | A | 25 June 2021 |
| | | | | DE | 102020205415 | A1 | 17 June 2021 |
| CN | 112009455 | A | 01 December 2020 | None | | | |
| CN | 104554251 | A | 29 April 2015 | None | | | |
| US | 2019039596 | A1 | 07 February 2019 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110932114X